# EUROPEAN PATENT APPLICATION

(11) **EP 2 068 311 A2**
(43) Date of publication of application: **10.06.2009**
(21) Application number: 08021235.0
(22) Date of filing: 05.12.2008
(51) Int. Cl.: G11B 7/0045, G11B 7/125

(54) **Information recording method and information recording/reproducing apparatus**

(30) Priority: 07.12.2007 JP 2007317012
(71) Applicant: Hitachi, Ltd., Tokyo 100-8280 (JP)
(72) Inventor: Kurokawa, Takahiro, Tokyo 100-8220 (JP)
(74) Representative: Beetz & Partner

(57) **Abstract**

To make the adjustment of a write-pulse parameter on the basis of a phase error between a readout signal and a clock signal applicable also to high-density optical discs. The channel bit length during trial writing is made larger than that during user-data recording. Then, a write-pulse parameter adjusted by the trial writing is applied as it is or with a predetermined correction to user-data recording.

## Description

### CLAIM OF PRIORITY

The present application claims priority from Japanese patent application JP 2007-317012 filed on December 7, 2007, the content of which is hereby incorporated by reference into this application.

### BACKGROUND OF THE INVENTION

### 1. Field of the Invention

The present invention relates to information recording methods and information recording/reproducing apparatuses for recording information by forming a mark and a portion between marks by irradiating an information recording medium with a pulse-like modulated light.

### 2. Description of the Related Art

In a recording type optical disk, information is recorded by forming a mark and a portion between marks by focusing and irradiating a laser light onto an information recoding layer of a disc. A pulse-like modulated laser light is used in recording information. The power or the pulse width of a write pulse is adjusted in accordance with the recording characteristic of a medium by carrying out trial writing prior to recording user data. The trial writing is usually carried out in an area exclusively for trial writing that is provided separately from the user-data recording area. The trial writing area is often provided on an inner peripheral side of the user area on a disc, as in Blu-ray Disc.

Since a "mark-edge recording method" for allowing both ends (edges) of a mark to have information is used in almost all the current optical discs, the mark edge position needs to be highly accurately controlled to stably form a fine mark. Thermal interference between marks is one of the reasons of the necessity of controlling the mark edge position. This is thermal intersymbol interference in recording, that is, an effect of heat, which has been provided to a medium in order to form a certain mark, on formation of the next mark. Since the magnitude of thermal interference differs depending on the length of a space (a portion between marks) adjacent to a mark, a method of correcting a shift in a mark edge position by finely adjusting the timing of a write pulse for each length of the adjacent space is used, as described in Japanese Unexamined Patent Application Publication No. Hei 5-135363, for example.

As the method of detecting a shift in the mark edge position, a method by measuring, for each combination of a mark length/a space length, the statistical average (edge shift) of the phase differences between a readout data signal and a clock signal which PLL (Phase Locked Loop) generates from the readout data signal is easily carried out.

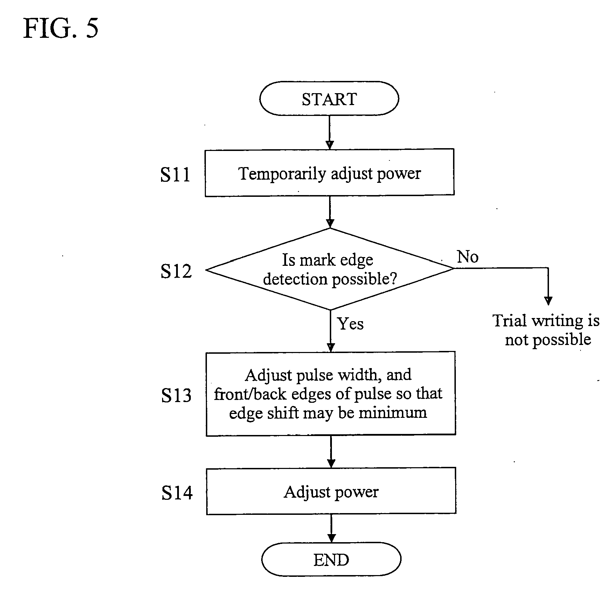

Fig. 5 is a diagram showing a typical procedure of the conventional trial write. First, an initial value of a write pulse waveform is set, and the write power is temporarily adjusted (S11). Here, the write power is adjusted by carrying out trial writing. Next, it is determined whether mark edge detection is possible or not (S12), and if possible, then the flow moves to the write pulse adjustment in Step 13. If the mark edge detection is not possible because of a small channel bit length and lack of optical resolution, then the write pulse adjustment is not possible. The main adjustment parameters of the write pulse adjustment in Step 13 are the pulse width, the timing of the front edge of a first pulse, and the timing of the back edge of a final pulse. These parameters are adjusted so that the jitter of a readout signal may approach the minimum. Upon completion of the parameter adjustment of the write pulse, the write power is adjusted again to determine the write power during user-data recording (S14), and then the trial writing is terminated.

### SUMMARY OF THE INVENTION

In the optical disc, the amount of data recorded per one information recording layer (recording density) has been improved until now by miniaturizing a light spot by reducing the wavelength of a light source and increasing the numerical aperture of an objective lens. It is said that a method using a blue semiconductor laser with a wavelength of 405 nm and an objective lens with a numerical aperture of 0.85 has come into practical use and thus the miniaturization of a light spot has almost reached its limit. However, attempts to further increase the recording density have been continuing due to progress in readout signal processing technologies, such as partial response maximum likelihood (PRML). For example, in order to obtain a recording capacity of 100 GB in one disc, four layers are required in the case of a recording density of 25 GB/layer, while in the case of 33 GB/layer, only three layers may be required. Reduction in the required number of recording layers is advantageous, for example, in terms of the manufacturing cost of a medium.

However, as the recording density increases and in turn the length of a mark or a space (channel bit length) per one bit of information is reduced, the S/N ratio of a readout signal will decrease due to lack of optical resolution of a light spot. Then, the detection accuracy of a mark edge position will decrease, and therefore the write pulse adjustment by the conventional method of measuring the phase error between a readout signal and a clock signal becomes difficult. In particular, if the channel bit length becomes small to such an extent that the light spot during reproduction cannot optically resolve a repetitive pattern of the shortest mark and the shortest space, then the readout-signal amplitude of this pattern becomes zero and the mark edge become completely undetectable.

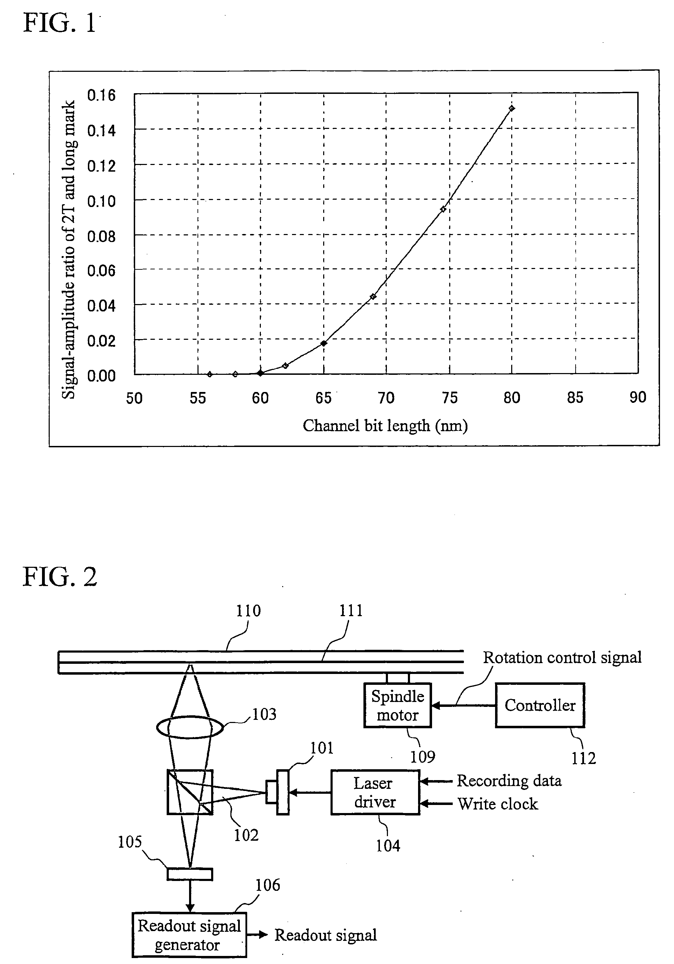

Fig. 1 is a result of calculating the readout-signal amplitude of the shortest 2T-2T pattern (T is the channel bit length) while varying the channel bit length under the condition of a Blu-ray Disc (with a wavelength of 405 nm and a numerical aperture of 0.85), using an optical diffraction simulator. The signal amplitude of 2T-2T is normalized by the signal amplitude of a repetitive pattern of a long mark and a long space. From this result, it is understood that if the channel bit length is reduced down to approximately 60 nm, the signal amplitude of 2T-2T becomes zero and this pattern cannot be optically resolved. This channel bit length corresponds to a recording density of approximately 31 GB/layer. In a practical sense, if the recording density exceeds approximately 27 GB/layer (a channel bit length of 69 nm), it is difficult to apply the conventional write pulse adjustment method of measuring the phase error between a readout signal and a clock signal.

It is therefore an object of the present invention to provide a trial writing method capable of accurately controlling the position of a recording-mark edge also in recording information on an optical disc at a high density.

The following means are used in the present invention.
(1) The channel bit length is varied between during trial writing and during user-data recording. Here, the trial writing is an optimum adjustment of a write-pulse parameter and is carried out prior to recording user-data. The examples of the write-pulse parameter include the power, the pulse width, or the rising or falling timing of a pulse. The trial writing is carried out in an area exclusively for the trial writing that is provided separately from the user-data recording area in an optical disc.
(2) As one method of varying the channel bit length between during trial writing and during user-data recording, a method of varying a linear velocity without varying a write-clock frequency can be used. The write clock signal serving as the reference of the timing of the write pulse is generated by frequency-multiplying a periodic signal of a wobble or pre-pit which is embedded in the disc in advance. In this case, although the ordinary write clock signal cannot be used because the linear velocity during trial writing is varied, a write clock with a fixed frequency that is separately generated may be used instead.
(3) As an alternative method of varying the channel bit length between during trial writing and during user-data recording, a method of reducing the write-clock frequency without varying the linear velocity can be used. This is made possible by varying the frequency-division ratio in generating the write clock from the wobble or pre-pit periodic signal.
(4) More specifically, the frequency-division ratio is determined so that the channel bit length during trial writing may be larger than the channel bit length during user-data recording. Usually, the channel bit length is specified by the specification of a disc, and the user data must be recorded in accordance with the specified channel bit length. Therefore, it is natural that in the conventional trial writing method, the trial writing is carried out with the same channel bit length as that during user-data recording. However, in the conventional trial writing method, if the channel bit length is small (the recording density is high), then the detection accuracy of a mark edge position will decrease due to lack of optical resolution of a light spot, and the adjustment of a write pulse becomes difficult. Then, in the present invention, the detection accuracy of a mark edge position is improved by increasing the channel bit length only during trial writing, so that the write pulse can be adjusted precisely. In order to increase the channel bit length during trial writing, either means of (2) and (3) described above is used.
(5) Moreover, the channel bit length is determined so that the channel bit length during trial writing may be larger than the channel bit length during user-data recording and so that a repetitive signal of the shortest mark and the shortest space may be optically resolved by the light spot of reproducing light. This limits the channel bit length during trial writing in the above (4).
   Even if the repetitive pattern of the shortest mark and the shortest space cannot be resolved, the data can be reproduced by use of a maximum likelihood decoding method, such as PRML. According to the present invention, the edge position of a mark can be accurately controlled using the conventional write pulse adjustment method of detecting the phase difference between a readout signal and a clock signal.
(6) The write-pulse parameter determined by carrying out trial writing by using either method of (1) to (5) is applied as it is or with a predetermined correction thereto when recording user data. Here, the write-pulse parameters do not include the power thereof. This is because if the linear velocity or the write clock is varied the power sensitivity of a medium will vary and in turn the optimum write power will vary. Since this improves the signal-to-noise ratio (S/N ratio) of the shortest mark/the shortest space signal during trial writing and in turn improves the edge detection accuracy, the adjustment of the write-pulse parameter can be carried out stably.

The write-pulse parameter is set with a time unit of (channel bit period)/N (where N is an integer). Accordingly, the write-pulse parameter adjusted during trial writing may be applied, as it is, during user-data recording, even if either means of (2) and (3) described above is used in order to vary the channel bit length during trial writing. However, if the write-pulse parameter adjusted by carrying out trial writing is just applied, as it is, during user-data recording, a sufficient readout signal quality might not be obtained. In this case, a correction value for the parameter may be learned in advance and then this correction may be made after trial writing. The correction value for the parameter may be, for example, a difference between the actual optimal parameter during user-data recording and the parameter derived from trial writing.

Here, the reason why the write-pulse parameter adjusted by carrying out trial writing using the varied channel bit length is applicable during user-data recording is described. The magnitude of thermal interference is characterized by the time interval from a heat application for forming a certain mark to a heat application for forming the next mark, and also by the heat conduction speed in the in-plane direction of a medium. Since the heat conduction speed of a medium is considered to be constant regardless of the linear velocity, the magnitudes of thermal interference are also considered to be almost equal if the write-clock frequency is constant. For this reason, the waveform parameter, which has been determined by carrying out trial writing under the condition that the recording density is reduced by fixing the write-clock frequency and by increasing the linear velocity, can be applied as an approximate parameter when recording at the original linear velocity. The same shall be applied also in cases where the channel bit length is reduced by reducing the write-clock frequency instead of increasing the linear velocity. Since the S/N ratio of the shortest mark signal/the shortest space signal is improved and the edge detection accuracy is improved thanks to the reduction in the recording density during test writing, the mark edge is easily controlled to an appropriate position.

According to the present invention, since the write pulse adjustment by mark edge detection is possible during test writing, drive units capable of handling high-capacity optical discs and capable of highly reliably recording/reproducing data can be manufactured at low cost.

### BRIEF DESCRIPTION OF THE DRAWINGS

Fig. 1 is a diagram showing a relationship between a channel bit length and a signal amplitude of 2T, (calculation result).
Fig. 2 is a schematic diagram showing a configuration example of an information recording/reproducing apparatus according to an embodiment of the present invention.
Fig. 3 is the block diagram of a write clock generator.
Fig. 4 is the block diagram of a mark edge detector.
Fig. 5 is a diagram showing a procedure of the conventional trial writing method.
Fig. 6 is a diagram showing a procedure of a trial writing method of an embodiment of the present invention.
Fig. 7 is a diagram showing a procedure of the trial writing method of the embodiment of the present invention.
Fig. 8 is a diagram showing a relationship between the recording density and an error rate in a track recorded by applying the embodiment of the present invention.

### DESCRIPTION OF THE PREFERRED EMBODIMENTS

Hereinafter, embodiments of the present invention will be described with reference to the accompanying drawings. Fig. 2 is a diagram showing a basic configuration example of an information recording apparatus according to the present invention. Laser light 102 emitted from a laser diode 101 is focused onto an information recording layer 111 of an optical disc 110 by an objective lens 103. Recording or reproducing of information is carried out using the focused laser light. The laser light reflected by the information recording layer 111 is received by an optical detector 105. The optical detector outputs electric current proportional to the power of the received light. The output electric current is converted into a readout signal by a readout-signal generator 106. The optical disc 110 is fixed to a spindle motor 109 and is rotationally driven. The spindle motor 109 is driven by a pulse signal, and the rotational speed is controlled by the frequency of the pulse signal. A laser driver 104 controls the emission of the laser diode 101. The emission timing and the emission period are set in the laser driver 104 in advance, and the electric current is controlled in accordance with the write clock signal and a write data signal synchronized therewith. The rotational speed of the spindle motor 109 is controlled by a rotation control signal which a controller 112 generates.

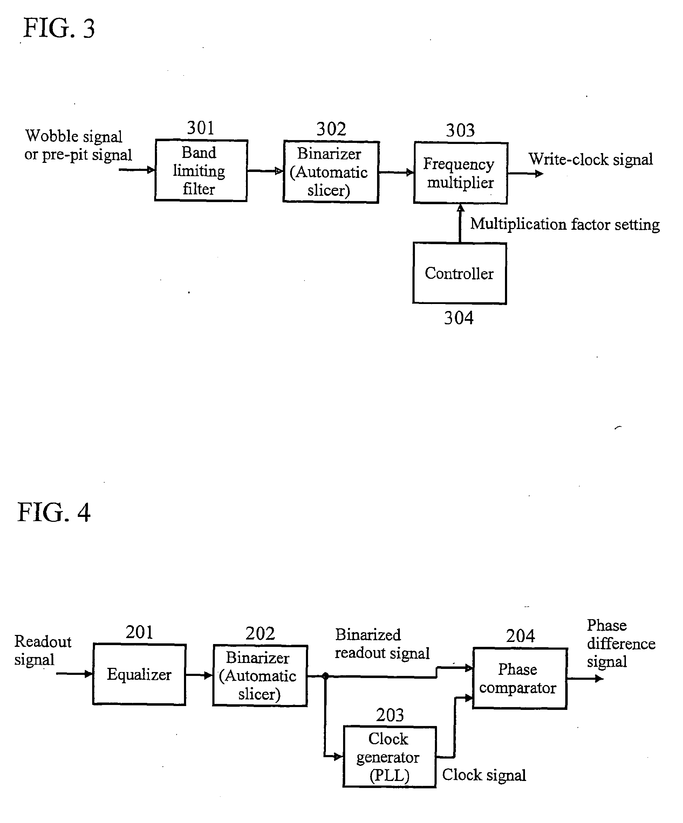

Fig. 3 is the block diagram of a write clock signal generator. A wobble signal or a pre-pit signal is converted into a binary signal by a binarizer 302 after an unwanted noise component thereof is removed by a band limiting filter 301. The binary signal is input to a frequency multiplier 303, and is converted into a write clock. The multiplication factor in the frequency multiplier 303 is set by a controller 304, and the write clock frequency is variably controlled.

Fig. 4 is the block diagram of a mark edge detector for trial writing. For the readout signal output from the readout-signal generator 106 in Fig. 2, high frequency noise thereof is removed by an equalizer 201 and the waveform thereof is also equalized so as to have a predetermined frequency characteristic. Next, the resultant readout signal is decoded into a binary-data signal (0 or 1) by a binarizer 202. Here, the binarizer 202 is an automatic slicer, and the binary decision-level during decoding is automatically adjusted so that the duty ratio of a mark (1) and a space (0) after decoding may become equal. Moreover, a clock generator 203 generates a clock signal from a binarized readout signal. A phase comparator 204 outputs a pulse with a width equal to the phase difference (time difference in the timing of signal edges) between the binarized readout signal and the clock signal, or pulses having a fixed width, the number of which is proportional to the phase difference.

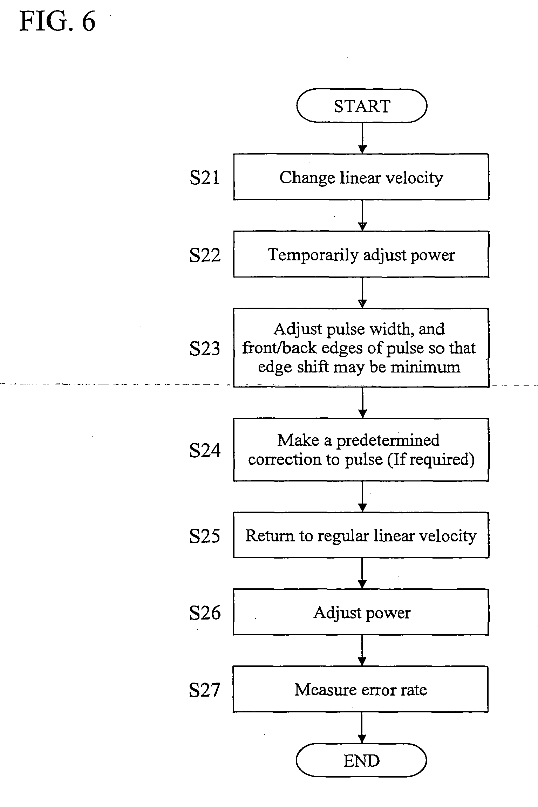

An example of the trial write procedure according to the present invention is described using a flowchart of Fig. 6. First, the frequency of a driving signal of the spindle motor is controlled to change the linear velocity so that the channel bit length may be a predetermined length larger than that during user-data recording (S21). Next, the power is temporarily adjusted prior to adjusting the write pulse (S22). Here, the reason why the power adjustment is a temporary one is that the power sensitivity of a medium differs and the optimum write power differs because the linear velocity differs from that during user-data recording. Next, the write-pulse parameter is adjusted based on the detection of the phase error between the readout signal and the clock signal (S23). The one to be adjusted here is the pulse width or the timing of a writing pulse. The phase errors are grouped and measured for each combination of the mark length of a mark adjacent to an edge and the space length of a mark adjacent to the edge. The parameter is adjusted so that the measured phase error may be small, and the resultant parameter is set to the laser driver. Next, if required, a predetermined correction is made to the pulse parameter that is adjusted in Step 23 (S24).

Subsequently, the rotational speed of the spindle motor is controlled so that the channel bit length may be the same as that during user-data recording (S25). Next, the write power is adjusted again (S26). The power is temporarily determined in the previous Step 22, however, since here the channel bit length is set to the same as that during user-data recording, the power is determined again. Next, the data is written, and is then reproduced to measure the error rate and check the write quality (S27). Here, since the channel bit length is small and the signal quality cannot be evaluated by reproducing data using a mark edge detection method, the data is reproduced by a decoding method, such as an ordinary PRML, which the drive unit has. Now, the trial writing is completed.

The write-pulse parameter adjusted through the above-described procedure is used in writing user data. Note that, if a desired write quality is not obtained in the error rate measurement in Step 27, the flow may return to Step 23 to redo the adjustment.

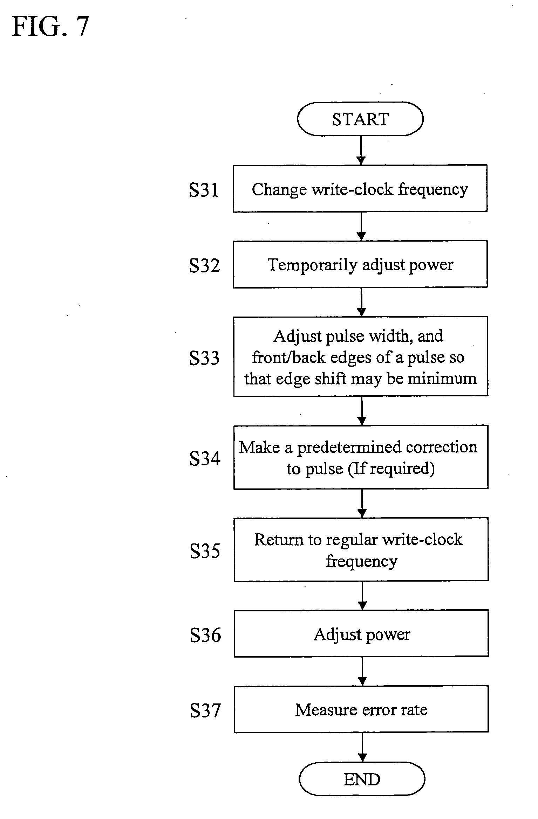

Another example of the trial write procedure according to the present invention is described using a flowchart of Fig. 7. Although the basic procedure is the same as that of Fig. 6 and the point that the channel bit length is made larger than that during user-data recording is also common, a means for varying the channel bit length differs.

First, the write clock frequency is controlled so that the channel bit length may be a predetermined length larger than that during user-data recording (S31). The write clock frequency is controlled by adjusting the frequency-division setting in the write clock generator. Next, the power is temporarily adjusted prior to adjusting the write pulse (S32). Here, the reason why the power adjustment is temporary one is that the power sensitivity of a medium differs and the optimum write power differs because the clock frequency differs from that during user-data recording. Next, the parameter of the write pulse is adjusted based on the detection of the phase error between the readout signal and the clock signal (S33). The one to be adjusted here is the pulse width or the timing of the writing pulse. The phase errors are grouped and measured for each combination of the mark length of a mark adjacent to an edge and the space length of a mark adjacent to the edge. The parameter is adjusted so that the measured phase error may be small, and the resultant parameter is set to the laser driver. Moreover, if required, a predetermined correction is made to the adjusted pulse parameter (S34).

Subsequently, the write clock frequency is controlled so that the channel bit length may be the same as that during user-data recording (S35). Next, the write power is adjusted (S36). The power is temporarily determined in Step 32, however, since here the channel bit length is set to the same as that during user-data recording, the power is determined again. Next, the data is written, and is then reproduced to measure the error rate and check the write quality (S37). Here, since the channel bit length is small and the signal quality cannot be evaluated by reproducing data using a mark edge detection method, the data is reproduced by a decoding method, such as the ordinary PRML, which the drive apparatus has. Now, the trial writing is completed.

The write-pulse parameter adjusted through the above-described procedure is used in writing user data. Note that, if a desired recording quality is not obtained in the error rate measurement in Step 37, the flow may return to Step 33 to redo the adjustment.

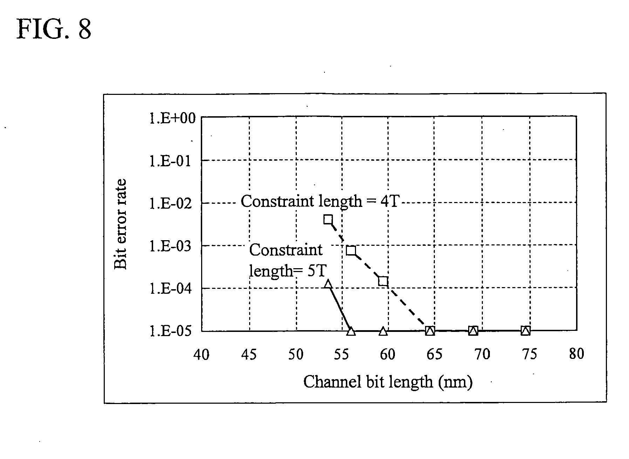

Fig. 8 shows a result of an experiment, in which the trial writing method of varying the linear velocity according to the present invention was applied, and the data was recorded while varying the channel bit length between 53.5 to 74.5 nm, and then the bit error rate in the recorded track was measured. In this experiment, the trial writing was carried out with a channel bit length of 74.5 nm, and the adjusted write-pulse parameter was applied to other channel bit length. Moreover, as the decoding method of a readout signal, PRML with constraint lengths of 4T and 5T (T is the channel bit length) was used, and the tap coefficient of a pre-equalizer and the target level of the PRML were adjusted as appropriate in accordance with the readout signal. As this experiment result shows, the practical bit error rate of no more than 10⁻⁵ was obtained for down to a channel bit length of 64.5 nm (Blu-ray Disc recording density of 28.9 GB/layer) in the PRML with the constraint length of 4T, and for down to the channel bit length of 56 nm (Blu-ray Disc recording density of 33.3 GB/layer) in the PRML with the constraint length of 5T, thus demonstrating the effect of the trial writing method according to the present invention. Note that, although the result of the experiment in the case where the linear velocity was varied is shown in Fig. 8, the same result was obtained also in the case where the write clock frequency was varied.

Although the embodiments described above are preferable specific examples of the present invention, the scope of the present invention is not limited to these forms.

### Description of Reference Numerals

101: laser diode, 102: laser light, 103: objective lens, 104: laser driver, 105: optical detector, 106: readout-signal generator, 109: spindle motor, 110: optical disc, 111: information recording layer, 112: controller, 201: equalizer, 202: binarizer (automatic slicer), 203: clock generator (phase locked loop (PLL)), 204: phase comparator, 301: band limiting filter, 302: binarizer, 303: frequency multiplier, 304: controller

## Claims

1. An information recording method for recording information by forming a mark and a portion between marks by irradiating an information recording medium with a pulse-like modulated laser light, the method comprising:
a trial write step of carrying out trial writing to a trial write area of the information recording medium while varying a write-pulse parameter, and then adjusting the parameter so that an edge shift in a readout signal that is reproduced by irradiating a reproducing laser light may become the minimum; and
a user-data recording step of recording user data in a user-data recording area of the information recording medium by using the write-pulse parameter adjusted in the trial write step, wherein
a length of a mark or a length of a portion between marks (a channel bit length) per one bit of information in the trial write step is made larger than that in the user-data recording step.

2. The information recording method according to claim 1, wherein in increasing the channel bit length, a linear velocity is increased without varying a write-clock frequency.

3. The information recording method according to claim 1, wherein in increasing the channel bit length, a write-clock frequency is reduced without varying the linear velocity.

4. The information recording method according to claim 1, wherein the channel bit length in the trial write step is increased so that a repetitive pattern of the shortest mark and the shortest space may be optically resolved using the reproducing laser light.

5. The information recording method according to claim 1, wherein in the user-data recording step, the write-pulse parameter adjusted in the trial write step is used by making a predetermined correction thereto.

6. An information recording/reproducing apparatus, comprising:
a laser light source;
a laser driver for modulating laser light into a pulse form, the laser light being emitted from the laser light source;
a spindle motor for rotationally driving an information recording medium; and
a controller for controlling each part of the apparatus, wherein
the information recording/reproducing apparatus records information by forming a mark and a portion between marks by irradiating the information recording medium with a write pulse from the laser light source, and reproduces information from a readout signal, the readout signal being detected by irradiating the information recording medium with a reproducing light from the laser light source,
the controller has a function to optimally adjust a write-pulse parameter of the write pulse by carrying out trial writing to the information recording medium by varying the write-pulse parameter, and
the controller, during trial writing, controls a rotational speed of the spindle motor or a write-clock frequency so that a length per one bit of information (a channel bit length) may be larger than the channel bit length during user-data recording, and then records user data using the write-pulse parameter adjusted by the trial write.
